Europäisches Patentamt

European Patent Office

Office européen des brevets

(19)

(11) **EP 0 706 668 B1**

(12) **FASCICULE DE BREVET EUROPEEN**

(45) Date de publication et mention
de la délivrance du brevet:
**06.10.1999 Bulletin 1999/40**

(21) Numéro de dépôt: **95918645.3**

(22) Date de dépôt: **26.04.1995**

(51) Int Cl.⁶: **G01V 1/40**

(86) Numéro de dépôt international:
**PCT/FR95/00547**

(87) Numéro de publication internationale:
**WO 95/30160 (09.11.1995 Gazette 1995/48)**

(54) **PROCEDE DE DIAGRAPHIE ACOUSTIQUE INSTANTANEE DANS UN PUITS DE FORAGE**

VERFAHREN ZUM AKUSTISCHES MESSEN WÄHREND DES BOHRENS IN EINEM BOHRLOCH

INSTANT ACOUSTIC LOGGING METHOD FOR WELL BORES

(84) Etats contractants désignés:
**AT BE CH DE DK ES FR GB GR IE IT LI LU MC NL
PT SE**

(30) Priorité: **28.04.1994 FR 9405166**

(43) Date de publication de la demande:
**17.04.1996 Bulletin 1996/16**

(73) Titulaire: **ELF AQUITAINE PRODUCTION
92400 Courbevoie (FR)**

(72) Inventeurs:
• **MAGENDIE, Jean
F-64000 Pau (FR)**
• **DRAOUI, Elyes
F-64000 Pau (FR)**

(74) Mandataire: **Timoney, Ian Charles Craig et al
ELF AQUITAINE
Departement Propriété Industrielle
Tour Elf
Cedex 45
92078 Paris La Défense (FR)**

(56) Documents cités:
**EP-A- 0 409 304          US-A- 4 926 391
US-A- 4 965 774**

• **GEOPHYSICS, vol. 56, no. 5, Mai 1991 TULSA US,
pages 628-634, J.W.RECTOR & B.P.MARION
'The use of drill-bit energy as a downhole
seismic source'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé de diagraphie acoustique instantanée dans un puits de forage, et plus généralement un procédé de mesure continue des caractéristiques acoustiques des couches souterraines entourant le puits de forage.

Au cours d'opérations de forage, on effectue un certain nombre de mesures physiques appelées diagraphies sur les couches souterraines.

Certaines de ces diagraphies sont effectuées pendant l'opération du forage proprement dite, ce sont des diagraphies instantanées, alors que d'autres sont effectuées lors d'interruptions des opérations de forage, et ce sont des diagraphies différées.

Les diagraphies ainsi réalisées permettent d'améliorer la connaissance des formations traversées et ceci, à la fois, pour une meilleure conduite du forage et une contribution directe à l'exploration des gisements d'hydrocarbure et autres.

Pour les diagraphies instantanées, on a proposé d'utiliser comme source de vibrations non pas un émetteur acoustique spécifique, mais l'outil de forage lui-même. En effet, les outils de forage, à molettes par exemple, travaillent sur le front de taille d'un puits de forage par percussion,et cette percussion est à l'origine de signaux acoustiques.

Le document FR-A-2.564.980 décrit un procédé de diagraphie acoustique instantanée dans lequel on utilise l'outil de forage comme source de signaux acoustiques, l'abrasion ou la destruction de la roche par les dents des molettes générant à la fois des vibrations dans le train de tiges de forage et dans le sous-sol traversé par le puits de forage. Ces vibrations acoustiques sont captées simultanément par un récepteur disposé à l'extrémité supérieure du train de tiges, et par des récepteurs disposés sur le sol à des points éloignés du puits de forage. Le traitement de ces signaux permet par comparaison entres eux d'obtenir des informations sur la roche entourant le puits qui sont similaires à celles fournies par des diagraphies acoustiques ou par des mesures de type sismique dans les puits.

Cependant, le procédé du document FR-A-2.564.980 présente des inconvénients dans la mesure où l'interprétation s'effectue en comparant deux signaux déformés tous les deux lors de leur propagation de l'outil vers la surface : l'un passant à travers de nombreuses couches de roche de densités différentes, l'autre passant le long du train de tiges de forage.

Les informations sur la roche entourant le puits de forage obtenues par ce type de procédé seraient plus pertinentes et plus précises si l'on pouvait comparer le signal capté par les récepteurs disposés sur le sol au signal émis par l'outil de forage, appelé signal pilote, et non pas au signal capté à l'extrémité supérieure du train de tiges qui, lui, est déformé par rapport au signal pilote.

Les documents US 4,965,774 et «Geophysics», Vol 56, n° 5, May 1991 Tulsa US, pages 628-634 décrivent chacun un procédé de diagraphie acoustique instantanée dans lequel on utilise comme source acoustique l'outil de forage, disposé en fond de puits. Les signaux acoustiques captés sur le sol sont comparés aux signaux pilotes émis par l'outil. Les signaux captés à l'extrémité supérieure de la garniture de forage sont traités afin de déduire la nature des signaux pilotes émis vraiment en fond de puits par l'outil. Le document «Geophysics» décrit que le traitement des vibrations mesurées à l'extrémité supérieure de la garniture s'effectue en leur appliquant une fonction de transfert sans préciser la nature de cette fonction.

La présente invention a donc pour objet un procédé de diagraphie acoustique instantanée dans lequel, à partir de mesures prises à l'extrémité supérieure du train de tiges, on détermine la nature du signal pilote émis par l'outil de forage afin de pouvoir comparer ce signal pilote avec les signaux captés à la surface en utilisant une fonction de transfert particulière.

Procédé de diagraphie acoustique instantanée dans lequel on utilise comme source acoustique un outil de forage disposé à une extrémité d'une garniture de forage comprenant un train de tiges et mis en rotation dans un puits (18), le procédé comportant les étapes consistant à mesurer, à l'extrémité supérieure de la garniture, les vibrations produites dans la garniture par l'outil de forage en rotation, à capter, en au moins un point sur le sol éloigné de l'outil des signaux acoustiques émis par l'outil, et à traiter ces signaux afin d'obtenir des données concernant la roche entourant le puits, lequel procédé comportant une étape additionnelle préalable de traitement des vibrations mesurées à l'extrémité supérieure de la garniture afin de déduire la nature des signaux pilotes émis en fond de puits par l'outil, les données concernant la roche entourant le puits étant obtenues en comparant les signaux acoustiques captés sur le sol aux signaux pilotes émis par l'outil en fond de puits tels que déduits dans l'étape de traitement caractérisé en ce que le traitement des vibrations mesurées à l'extrémité supérieure de la garniture s'effectue en leur appliquant la fonction de transfert $M_{garniture}$, obtenue en effectuant le produit des fonctions de transfert élémentaires $M_{tige}$, où

$$M_{tige} = \begin{pmatrix} ch(g.L) & \dfrac{-j.Z.sh(g.L)}{W} \\ \dfrac{-W.sh(g.L)}{j.Z} & ch(g.L) \end{pmatrix}$$

avec :

$$g^2 = -\left(\frac{W^2}{a}\right) + \frac{j.W.c}{(\rho.S.a)^2}$$

$$Z^2 = (\rho.S.a)^2 - \frac{J.c}{W}\rho.S.a^2$$

Avec :

$L$ : longueur de la tige.
$a$ : vitesse de propagation des vibrations dans la tige.
$S$ : section de la tige.
$c$ : amortissements des vibrations dans la tige.
$\rho$ : masse volumique de la tige.
$j$ : complexe ($j^2$=-1).
$ch$: cosinus hyperbolique
$sh$: sinus hyperbolique
$w$ : une pulsation

Un tel procédé présente l'avantage d'augmenter considérablement la pertinence et la précision des informations sur la roche entourant le puits de forage.

D'autres caractéristiques et avantages de la présente invention ressortiront à la lecture de la description suivante, donnée à titre indicatif mais non limitatif, ainsi que des dessins annexés, sur lesquels :

- la figure 1 est une représentation schématique en coupe du sous-sol et des moyens mis en oeuvre dans le procédé selon l'invention ;
- la figure 2 représente deux courbes de force et d'accélération enregistrées à la surface ;
- la figure 3 représente deux courbes de force et d'accélération déterminées selon la présente invention, et
- la figure 4 représente deux courbes de force et d'accélération enregistrées en fond de puits.

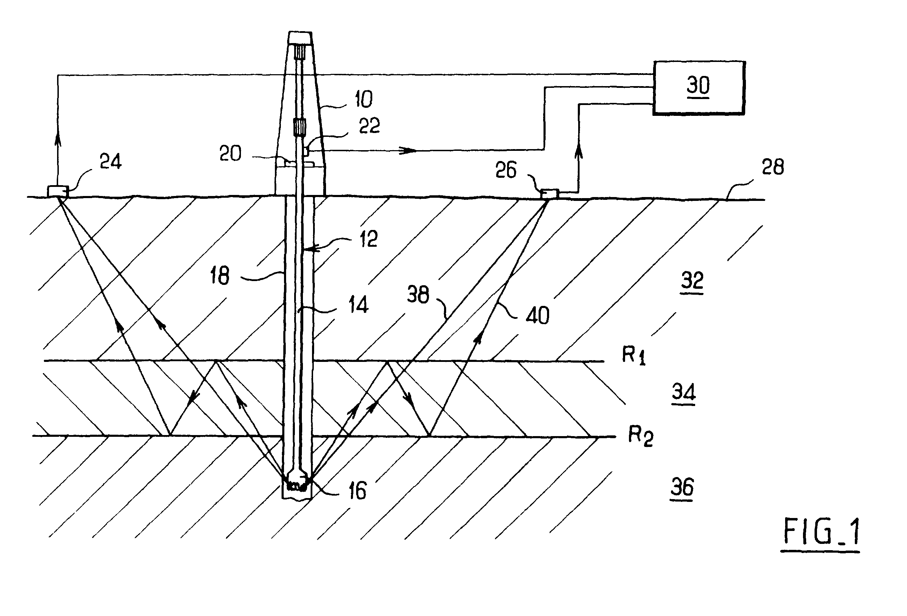

Comme représenté sur la figure 1, un mât de forage 10 supporte une garniture de forage, représentée généralement en 12, qui comprend un train de tiges 14 et un outil de forage 16. La garniture de forage 12, s'étendant dans un puits 18 dans le sous-sol, est mise en rotation par une table de rotation 20 disposée en bas du mât 10.

La garniture de forage 12 est munie à son extrémité supérieure d'un ensemble de capteurs 22 qui, de préférence, est disposé au-dessus de la table de rotation 20. Des capteurs 24,26 tels que des géophones sont disposés sur la surface du sol 28 de façon équidistante du puits de forage 18. L'ensemble de capteurs 22 et les géophones 24,26 sont reliés par câbles, ou par télémesure, à un centre de traitement 30 qui sera décrit plus en détail ci-après.

La rotation-percussion de l'outil de forage 16 qui, dans l'exemple illustré, est du type à molettes, engendre des ondes qui se propagent, de façon continue, suivant deux chemins principaux.

Le premier chemin est constitué par la garniture de forage 12, les ondes vibratoires étant captées par l'ensemble de capteurs 22. Le deuxième chemin est constitué par la ou les formations traversées et comprises entre l'outil 16 et la surface 28 du sol. Dans l'exemple illustré, on suppose que le sous-sol est divisé en trois formations souterraines 32,34 et 36 qui définissent des réflecteurs $R_1$ et $R_2$.

L'énergie vibratoire transmise au géophone 26 par l'outil de forage 16, qui est alors considéré comme une source sismique, peut suivre plusieurs trajets acoustiques différents. Le premier trajet acoustique 38 est direct et correspond à une première arrivée sur le géophone 26. Un deuxième trajet acoustique 40 aboutit au même géophone 26 après réflexions successives sur les réflecteurs $R_1$ et $R_2$. Les instants auxquels sont enregistrés les signaux produits par les ondes élastiques se propageant suivant l'un des trajets acoustiques 38,40 seront plus ou moins décalés dans le temps, selon le nombre de réflexions intervenantes.

Par ailleurs, les ondes vibratoires générées par l'outil de forage 16, se propageant par la garniture de forage 12, sont captées par l'ensemble de capteurs 22. La comparaison des signaux reçus par les géophones 24,26 et par l'ensemble de capteurs 22 permet de déterminer la nature des diverses formations se trouvant autour du puits de forage 18.

Selon l'invention, afin d'améliorer la précision du procédé, on procède à un traitement préalable du signal capté à l'extrémité supérieure de la garniture 12 par les capteurs 22 afin de déterminer la nature exacte du signal pilote émis par l'outil de forage 16, avant de comparer ce signal pilote aux signaux captés par les géophones 24,26.

Le signal reçu à la surface a notamment pour origine des émissions basses fréquences générées par l'outil et qui sont fonction de la géométrie et/ou de la vitesse de rotation de l'outil.

La détermination du signal pilote s'effectue en deux étapes. La première étape consiste à vérifier la qualité dde la transmission du signal émis par l'outil. Ceci s'effectue en vérifiant que les composantes basses fréquences générées par l'outil forment une partie significative, par exemple de l'ordre de 50%, dans l'energie du signal mesuré en surface.

Ayant confirmé la qualité du signal, on procède à la détermination du signal pilote à partir de mesures d'accélération et de force prises à l'extrémité supérieure de la garniture 12 par les capteurs 22. Pour ce faire, on considère que la garniture est constituée d'une série de tiges dont chacune est représentée par une fonction de transfert élémentaire $M_{tige}$. La fonction de transfert globale de la garniture $M_{garniture}$ est obtenue en effectuant le produit des fonctions de transfert élémentaires.

La détermination du signal pilote force ($F_{pilote}$) ou accélération ($A_{pilote}$) se fait par la multiplication du signal de surface correspondant ($F_{surface}$ ou $A_{surface}$) par la matrice de transfert globale $M_{garniture}$.

Chaque matrice de transfert élémentaire $M_{tige}$ s'exprime comme suit :

$$M_{tige} = \begin{pmatrix} ch(g.L) & \dfrac{-j.Z.sh(g.L)}{W} \\ \dfrac{-W.sh(g.L)}{j.Z} & ch(g.L) \end{pmatrix}$$

Avec :

$$g^2 = -(\frac{W^2}{a}) + \frac{j.W.c}{(\rho.S.a)^2}$$

$$Z^2 = (\rho.S.a)^2 - \frac{J.c}{W}\rho.S.a^2$$

Avec :

**L** : longueur de la tige.
**a** : vitesse de propagation des vibrations dans la tige.
**S** : section de la tige.
**c** : amortissements des vibrations dans la tige.
$\rho$ : masse volumique de la tige.
**j**: complexe ($j^2$=-1).

Ainsi, en appliquant cette matrice de transfert aux signaux force et accélération mesurés à la surface, on peut déterminer les valeurs de force et d'accélération émises par l'outil. Ces valeurs peuvent ensuite être comparées aux mesures prises par les géophones.

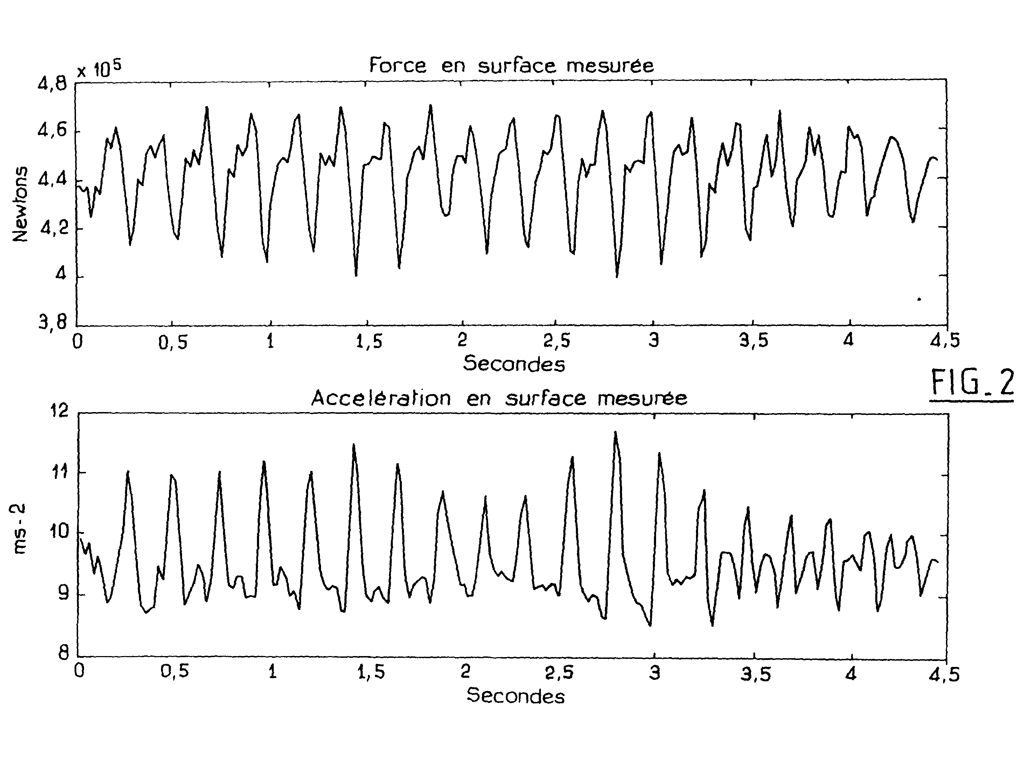

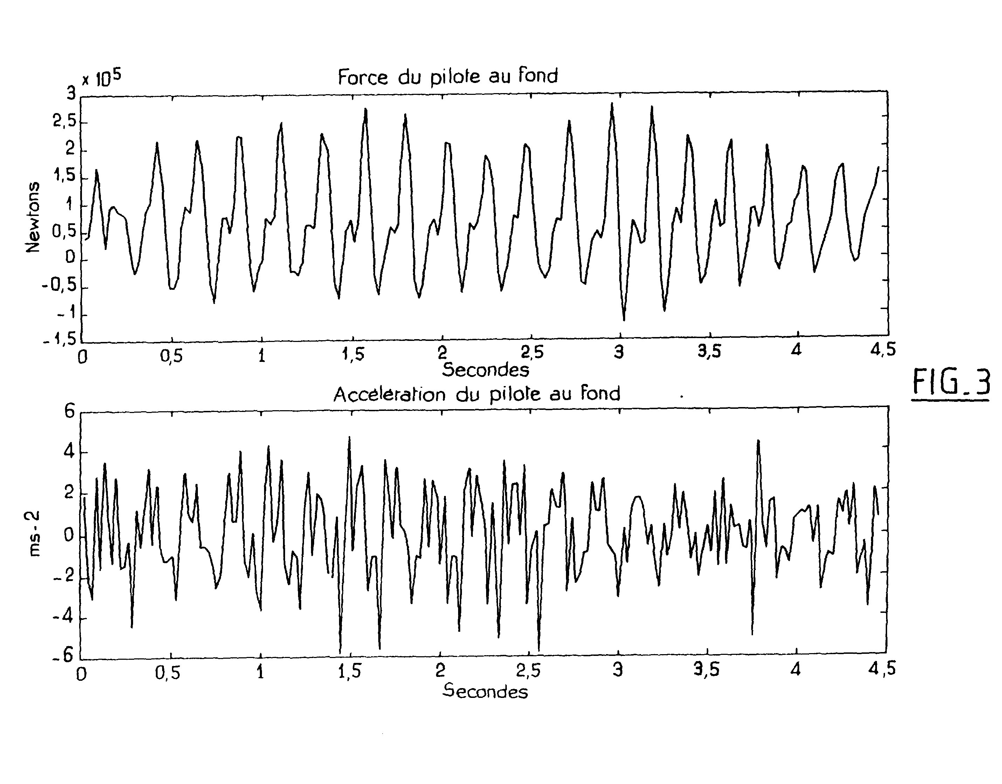

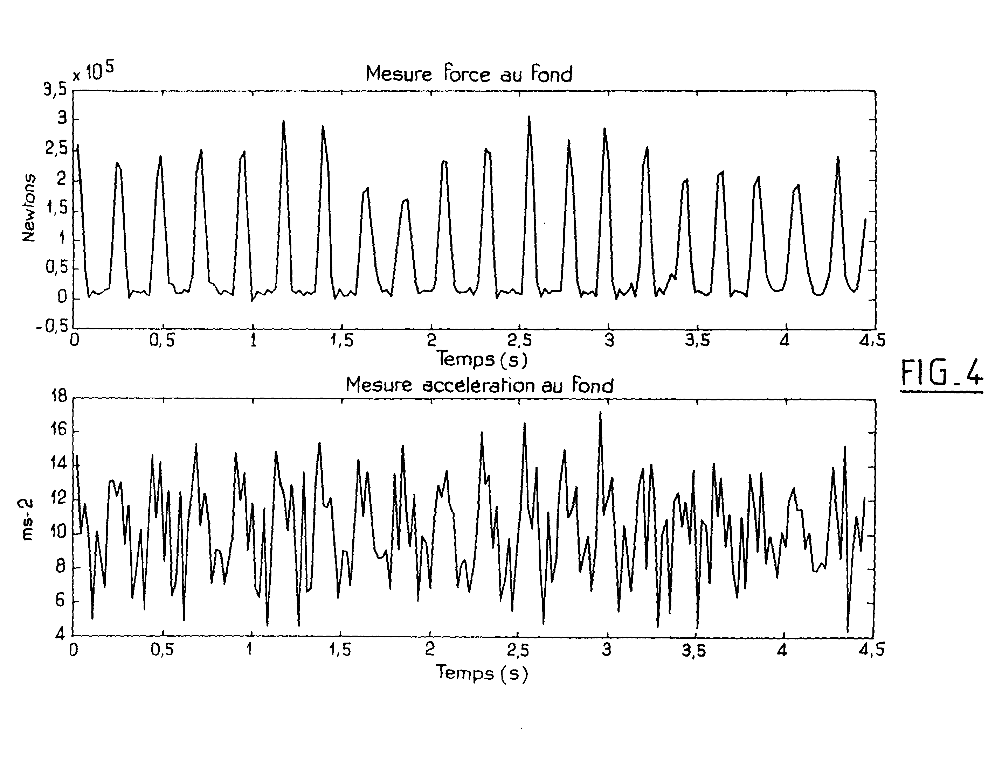

La figure 2 comporte deux courbes illustrant l'évolution de la force et de l'accélération mesurées à la surface en fonction du temps. La figure 3 comporte deux courbes analogues illustrant la force et l'accélération déterminées à partir du procédé selon l'invention. Enfin, la figure 4 comporte deux courbes analogues à celles de la figure 3 illustrant des mesures de force et d'accélération enregistéres par un outil de mesure, qui, pour une expérimentation a été disposé juste au dessus de l'outil de forage. Comme on peut le constater, les valeurs déterminées par le procédé de l'invention correspondent de manière satisfaisante aux mesures enregistrées en fond de puits.

Le procédé selon l'invention présente l'avantage additionnel d'améliorer la portée sismique au dela l'outil de forage.

Les capteurs 22 peuvent être soit des capteurs axiaux destinés à mesurer la force axiale dynamique et l'accélération axiale de la garniture 12, soit des capteurs de torsion destinés à mesurer le couple et l'accélération de torsion.

## Revendications

1. Procédé de diagraphie acoustique instantanée dans lequel on utilise comme source acoustique un outil de forage (16) disposé à une extrémité d'une garniture de forage (12) comprenant un train de tiges et mis en rotation dans un puits (18), le procédé comportant les étapes consistant à mesurer, à l'extrémité supérieure de la garniture (22), les vibrations produites dans la garniture par l'outil de forage en rotation, à capter, en au moins un point (26) sur le sol éloigné de l'outil des signaux acoustiques émis par l'outil, et à traiter ces signaux afin d'obtenir des données concernant la roche entourant le puits, lequel procédé comportant une étape additionnelle préalable de traitement des vibrations mesurées à l'extrémité supérieure de la garniture afin de déduire la nature des signaux pilotes émis en fond de puits par l'outil, les données concernant la roche entourant le puits étant obtenues en comparant les signaux acoustiques captés sur le sol aux signaux pilotes émis par l'outil en fond de puits tels que déduits dans l'étape de traitement caractérisé en ce que le traitement des vibrations mesurées à l'extrémité supérieure de la garniture s'effectue en leur appliquant la fonction de transfert $M_{garniture}$, obtenue en effectuant le produit des fonctions de transfert élémentaires $M_{tige}$, où

$$M_{tige} = \begin{pmatrix} ch(g.L) & \dfrac{-j.Z.sh(g.L)}{W} \\ \dfrac{-W.sh(g.L)}{j.Z} & ch(g.L) \end{pmatrix}$$

avec :

$$g^2 = -\left(\dfrac{W^2}{a}\right) + \dfrac{j.W.c}{(\rho.S.a)^2}$$

$$Z^2 = (\rho.S.a)^2 - \dfrac{J.c}{W}\rho.S.a^2$$

et avec :

**L** : longueur de la tige.
**a** : vitesse de propagation des vibrations dans la tige.
**S** : section de la tige.
**c** : amortissements des vibrations dans la tige.
$\rho$ : masse volumique de la tige.
**j** : complexe ($j^2$=-1).
**ch**: cosinus hyperbolique
**sh**: sinus hyperbolique
**w** : une pulsation

2. Procédé selon la revendication 1 caractérisé en ce que, afin de mesurer les vibrations produites dans la garniture, on utilise des capteurs axiaux ou des capteurs de torsion.

## Patentansprüche

1. Akustisches Echtzeit-Bohrlochmeßverfahren, bei dem als Schallquelle ein Bohrwerkzeug (16) verwendet wird, das an einem Ende eines Bohrgestänges (12) angeordnet ist, das einen Stangenzug aufweist und in einem Bohrloch (18) in Drehung versetzt wird, wobei das Verfahren die folgenden Schritte aufweist: Messen der durch das sich drehende Bohrwerkzeug im Gestänge verursachten Schwingungen am oberen Ende (22) des Gestänges, Erfassen der vom Werkzeug ausgesandten Schallsignale mindestens an einem auf der Oberfläche und vom Bohrwerkzeug entfernt liegenden Punkt (26), Verarbeiten der Signale zum Erhalten von Daten über das das Bohrloch umgebende Gestein, wobei das Verfahren den folgenden zusätzlichen vorgeschalteten Schritt zur Verarbeitung der am oberen Ende des Gestänges gemessenen Schwingungen zum Ableiten der Eigenschaften von am unteren Ende des Bohrlochs vom Werkzeug ausgesandten Pilotsignalen aufweist, wobei die Daten, die das Bohrloch umgebende Gestein betreffen, dadurch erhalten werden, daß die auf der Oberfläche aufgefangenen Schallsignale mit den vom Werkzeug am unteren Ende des Bohrlochs ausgesandten Pilotsignalen, wie sie durch den Verarbeitungsschritt erhalten werden, verglichen werden, dadurch gekennzeichnet, daß die Verarbeitung der am oberen Ende des Gestänges gemessenen Schwingungen durch Anwendung der Funktion $M_{garniture}$ erfolgt, die durch Berechnung des Produkts von Teilfunktionen $M_{tige}$ wie der folgenden erhalten wird:

$$M_{tige} = \begin{pmatrix} ch(g.L) & \dfrac{-j.Z.sh(g.L)}{W} \\ \dfrac{-W.sh(g.L)}{j.Z} & ch(g.L) \end{pmatrix}$$

wobei

$$g^2 = -\left(\frac{W^2}{a}\right) + \frac{j.W.c}{(\rho.S.a)^2}$$

$$Z^2 = (\rho.S.a)^2 - \frac{J.c}{W}\rho.S.a^2$$

sowie:

L : Länge der Bohrstange
a : Fortbewegungsgeschwindigkeit der Schwingungen in der Bohrstange
S : Stangenquerschnitt
c : Dämpfung der Schwingungen in der Stange
$\rho$ : Dichte der Bohrstange
j : imaginäre Einheit ($j^2$=-1)
ch: cosinus hyperbolicus
sh: sinus hyperbolicus
w : ein Impuls

2. Verfahren nach Anspruch 1, dadurch gekennzeichnet, daß zum Messen der im Gestänge erzeugten Schwingungen Axial- oder Torsions-Detektoren verwendet werden.

**Claims**

1. Method for instantaneous acoustic well-logging in which a drilling tool (16) is used as an acoustic source and is disposed at one end of a drilling assembly (12) which comprises a rod string and is rotated in a well (18), the method comprising stages consisting in the measurement, at the upper end of the assembly (22), of the vibrations produced in the assembly by the rotating drilling tool, the acquisition, at at least one point (26) on the ground remote from the tool, of acoustic signals emitted by the tool, and the processing of those signals in order to obtain data concerning the rock surrounding the well, the method comprising an additional preliminary stage for processing the vibrations measured at the upper end of the assembly in order to deduce the nature of the pilot signals emitted at the bottom of the well by the tool, the data concerning the rock surrounding the well being obtained by comparing the acoustic signals acquired on the ground with the pilot signals emitted by the tool at the bottom of the well as deduced in the processing stage, characterised in that the processing of the vibrations measured at the upper end of the assembly is effected by applying to them the transfer function $M_{assembly}$, obtained by working out the product of the elementary transfer functions $M_{rod}$, where

$$M_{rod} \quad = \quad \left( \begin{array}{cc} ch(g.L) & \dfrac{-j.Z.sh(g.L)}{W} \\ \dfrac{-W.sh(g.L)}{j.Z} & ch(g.L) \end{array} \right)$$

with:

$$g^2 = . \left(\frac{W^2}{a}\right) + \frac{j.W.c}{(p.S.a)^2}$$

$$Z^2 = (p.S.a)^2 . \frac{J.c}{W} p.S.a^2$$

and with:

L : length of the rod,
a : rate of propagation of the vibrations in the rod,
S : section of the rod,
c : damping of the vibrations in the rod,
p : density of the rod,
j : complex ($j^2$=-1),
ch: hyperbolic cosine,
sh: hyperbolic sine,
w : a pulsation.

2. Method according to claim 1, characterised in that, in order to measure the vibrations produced in the assembly, axial sensors or torsion sensors are used.

FIG.1

EP 0 706 668 B1

Force en surface mesurée

Accélération en surface mesurée

FIG. 2

EP 0 706 668 B1

Force du pilote au fond

$\times 10^5$

Newtons

Acceleration du pilote au fond

ms-2

Secondes

FIG_3

Mesure force au fond

Mesure accélération au fond

FIG_4

EP 0 706 668 B1